# EUROPÄISCHE PATENTSCHRIFT

(11) **EP 2 824 079 B1**
(45) Veröffentlichungstag und Bekanntmachung des Hinweises auf die Patenterteilung: **28.09.2016**
(21) Anmeldenummer: 13004174.2
(22) Anmeldetag: 23.08.2013
(51) Int. Cl.: C02F 1/68, C02F 1/44

(54) **Solebehälterüberwachung einer Wasseraufbereitungsanlage**
Brine container monitoring of a water treatment system
Surveillance du réservoir de saumure d'une installation de production d'eau

(30) Priorität: 13.07.2013 DE 102013011751
(43) Veröffentlichungstag der Anmeldung: 14.01.2015
(73) Patentinhaber: Völker, Manfred, 63825 Blankenbach (DE)
(72) Erfinder: Völker, Manfred, 63825 Blankenbach (DE)
(74) Vertreter: Flosdorff, Jürgen

(56) Entgegenhaltungen:
- DE-U1- 20 011 779
- US-A- 4 002 215
- US-A1- 2003 050 736
- US-A1- 2008 046 215
- US-A1- 2011 084 030
- US-B1- 6 222 137

## Beschreibung

Es wird ein Fluidsystem zur Qualitäts-, Funktionsüberwachung und/oder Steuerung von physikalisch und chemisch wirkenden Filterstufen einer Wasservorbehandlung für den Betrieb einer Umkehrosmose-, oder einer anderen Wasseraufbereitungs- bzw. Wasserüberwachungsanlage beschrieben.

Nachteil von Filterstrecken ist die nicht oder nur aufwändig durchzuführende Ferndiagnose von Chlor und Härte bzw. Überwachung des Verschmutzungsgrades von mechanischen Filtern.

Außerdem ist es aus Sicherheitsgründen, insbesondere bei Dialysewasseraufbereitungen, erforderlich, täglich eine aufwändige manuelle Dokumentation der Wasserhärte und oder des Chlorgehaltes durchzuführen, insbesondere um den Nachweis zu führen, dass das toxische Chlor aus der Flüssigkeit durch die eingesetzten Filter entfernt wurde.

Vorhandene Chlorsensoren zur Onlinemessung werden häufig nicht regelmäßig gechlort oder können bei Abwesenheit von Chlor in der Flüssigkeit keine zuverlässigen Messergebnisse liefern.

Um schwer lösbare Salze z.B. Kalzium- und oder Magnesium aus dem Wasser zu entfernen werden häufig Enthärter eingesetzt.

Bei Verwendung von Enthärtern, mit sauren Kationentauscherharzen, sind diese mittels Natriumchloridsolelösung regelmäßig zu regenerieren.

Diese Regeneration wird in der Regel mit Natriumchloridlösung durchgeführt, die in einem sogenannten Solebehälter, in dem Salz in einer vorherbestimmten Flüssigkeitsmenge aufgelöst wird, bereitgestellt ist.

Ein Ausfall der Regenerierung z.B wegen fehlender Natriumchloridsolelösung kann zu gravierenden Verkalkungen der nachfolgenden Anlagen führen.

Darüber hinaus neigen Enthärter wegen der relativ großen Harzvolumen zu mikrobiellem Wachstum mit nachfolgender Kontamination der durchfließenden Flüssigkeit.

Problematisch sind Filterverblockungen, weil der daraus resultierende Austausch von Filtermäterial normalerweise mit einer Betriebsunterbrechung einhergeht.

Es wurde entwickelt eine Aktor-, Sensorsteuerung und einer Software, die es dem Anwender ermöglichen, die Funktionalität einer Anlage per online-Zugriff zu bewerten und auf dieser Basis eine Ferndiagnose über den aktuellen Betriebszustand zu erhalten.

Um den normativen und oder hausinternen Anforderungen zu genügen, können mit der automatischen Registrierung gleichzeitig die erforderlichen Dokumentationsnachweise durch die angeschlossene EDV erbracht werden.

Durch die angestrebte anlagenspezifische Auswertung durch Analyse und Visualisierung der Betriebsparameter wird es möglich, eine azyklische Verteilung der Service-Einsätze und damit eine Verringerung der Servicezahl zu erreichen.

Auf dieser Basis ist ein ökonomisches und ökologischeres Vorgehen möglich, da somit der Einsatz von geschultem Personal vor Ort besser koordiniert und verschleißbedingte Ausfälle gezielt und präventiv vermieden werden können.

Um die vorgenannten Nachteile zu vermeiden werden vor und nach den Filterstufen mittels geschalteten Ventilen Teilströme zu dem entsprechenden Sensor geführt und durch elektronische Messeinrichtungen ausgewertet. Wobei diese Messeinrichtungen auch integraler Bestandteil von nachfolgenden Anlagen einer Wasseraufbereitung und/oder auch eine Leitwarte sein können. Wobei ein bidirektionaler Betrieb zur Beeinflussung von Aktoren und Sensoren möglich ist.

Mit Vorteil werden mit einem elektronischen Druckaufnehmer unterschiedliche mechanische Filterstufen online auf ihren Verschmutzungsgrad durch Messung der Drücke und Ermittlung der Druckdifferenz überwacht und bei geeigneten Filtern mit entsprechender Rückspülautomatik auch ein automatisches Rückspülprogramm eingeleitet.

Nach einem anderen Gesichtspunkt der Erfindung wird ein online messender Chlorsensor eingesetzt, dessen sicherheitsrelevante Funktion erfindungsgemäß überprüft wird, indem dem Sensor elektrolytisch erzeugtes Chlor regelmäßig mit bekannter Konzentration zugeführt wird.

Das Messergebnis wird elektronisch registriert und dokumentiert.

Das Chlor kann aus einer vorhandenen Solelösung hergestellt werden.

Die Funktion des Enthärters, also die Filtration und Reduzierung der schwerlösbaren Calcium und Magnesiumsalze, kann durch einen ionensensitiven Calcium- und oder Magnesiumsensor überwacht werden.

Die Aufgabe der Erfindung ist die Bereitstellung einer Wägeeinrichtung mit den Merkmalen des Anspruchs 1 für die Überwachung des Füllstandes des Salzsolebehälters, bzw. das Restvolumen der Salze im Solebehälter.

Dazu wird der Solebehälter auf ein Konstruktionselement mit Wäagezelle platziert. Da das konstruktive Untergestell unabhängig von dem verwendeten Solebehälter jederzeit mit Vorteil einzusetzen ist, können auch bereits im Betrieb befindliche Solebehälter mit dieser Überwachungseinrichtung bestückt werden.

Es ist möglich, das Solevolumen direkt- oder als Ampellösung mit Meldungsfarbe anzuzeigen, eine Weiterleitung und Registrierung an eine Leitwarte oder einer nachfolgenden Wasseraufbereitung, die z.B. als RO Anlage ausgebildet sein kann, ist ebenfalls möglich.

Damit kann eine vom Betriebspersonal täglich durchzuführende Inspektion und Dokumentation des Salzvorrates im Solebehälter entfallen.

Ein regelmäßige leichte Chlorierung des Enthärters während der Regenerierung durch elektrolytisch, aus dem Solebehälter des Enthärters erzeugtem Chlor, reduziert das mikrobielle Wachstum im Enthärterharz und sorgt somit für keimfreiere Flüssigkeit.

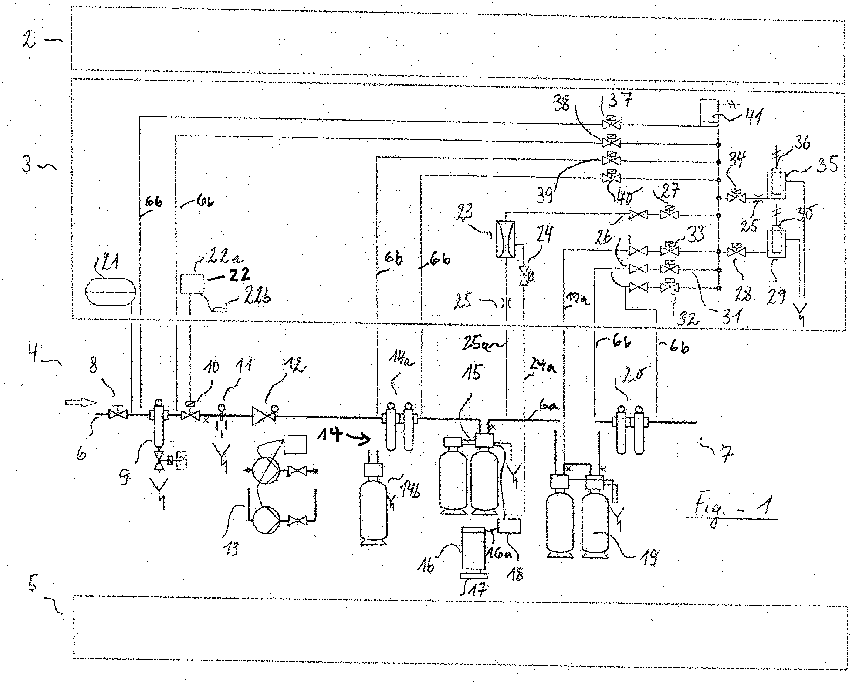

Figur 1 zeigt eine erfindungsgemäße Vorfiltrationseinheit mit einer mechanischchemischen Filterstufe (4), eine Aktor-Sensor Überwachungseinheit (3), eine zugehörige Auswerteelektronik (2) und eine mögliche, beispielsweise zu einer nachfolgenden Umkehrosmose gehörende Elektronik (5), wobei die Elektronik (2) auch als Leitwarten-Elektronik ausgebildet sein kann und mit Elektronik (5) kommuniziert.

Die mechanisch-chemische Filterstufe (4) ist hinsichtlich der Auswahl der angeordneten Filterstufen nur beispielhaft dargestellt, um die Funktion der erfindungsgemäßen Überwachung zu verdeutlichen.

Die beispielhafte Anordnung beginnt mit dem Wassereingang (6), einem Absperrventil (8), und einem automatisch rückspülbaren Vorfilter (9) mit Abflussventil und Drainageanschluss. Es folgt ein Sicherheitsabsperrventil (10), welches von einem Leckagemelder (22a) mit Flüssigkeitsensor (22b) aktiviert wird.

Weitere Komponenten können ein Rohrtrenner (11) und ein Rückflussverhinderer (12) zur Vermeidung einer Kontamination des Wassereingangs (6) sein.

Bei niedrigen Wasserzulaufdrücken besteht die Möglichkeit der Hinzunahme einer Druckerhöhungseinheit (13). Eine weitere Filterstufe (14) kann sowohl als Kartuschenfilter (14a), Sandfilter (14b), oder als hier nicht dargestellter Hohlfaserfilter im Nano- bzw. Ultraporenbereich ausgebildet sein.

(15) zeigt einen Enthärter, beispielsweise als Doppelenthärter dargestellt, der in der Regel mit starksaurem, kationenhaltigem Harz gefüllt wird, welches bei Erschöpfung regelmäßig mit NaCl-Lösung aus der Salzsoleaufbereitung (16) zu regenerieren ist.

Dabei ist es wichtig, den Füllstand des Salzes im Salzsolebehälter (16) zu überwachen. Dies erfolgt mit einer Wäageeinrichtung (17), die als eigenständiges konstruktives Untergestell ausgebildet ist.

US 2011/084030 A1 und US 2008/046215 A1 offenbaren eine Wasseraufbereitungsanlage, wobei ein Behälter auf einer Wägeeinrichtung angeordnet ist, die das Gewicht des Salzsolebehälters misst. US 2011/084030 A1 befasst sich mit dem Chloren des Wassers eines Swimming Pools oder von Trinkwasser und/oder mit der Abwasserbehandlung durch Natriumhypochlorid. Hierzu wird ein Behälter, in den das Natriumhypochlorid eingefüllt wird, gewogen, wobei der Tank auf einer Wägeeinrichtung steht. Außer dem Anfangsgewicht wird auch das Datum der Füllung des Tanks in einer elektronischen Steuereinrichtung erfasst. Das Natriumhypochlorid wird über eine Pumpe dem zu behandelnden Wasser zugeführt, wobei die Geschwindigkeit der Pumpe mit der Zeit erhöht wird, um einen Abbau des Natriumhydrochlorids in dem Vorratstank auszugleichen. US 2008/046215 A1 befasst sich mit der Erfassung des Füllens eines Vorratstanks, der auf einer Wägeeinrichtung angeordnet ist, wobei die Füllzeit des Vorratstanks und die gesamte Nutzungszeit der Füllung von einer elektronischen Steuereinrichtung ermittelt werden. In beiden Dokumenten ist der jeweilige Behälter auf einer Plattform einer elektronischen Waage angeordnet, zu der keine weiter Ausbildung offenbart ist. Ferner US 4002215 A und US 6222137 B1 offenbaren Wägeeinrichtungen für die Überwachung von Flüssigkeitsbehältern.

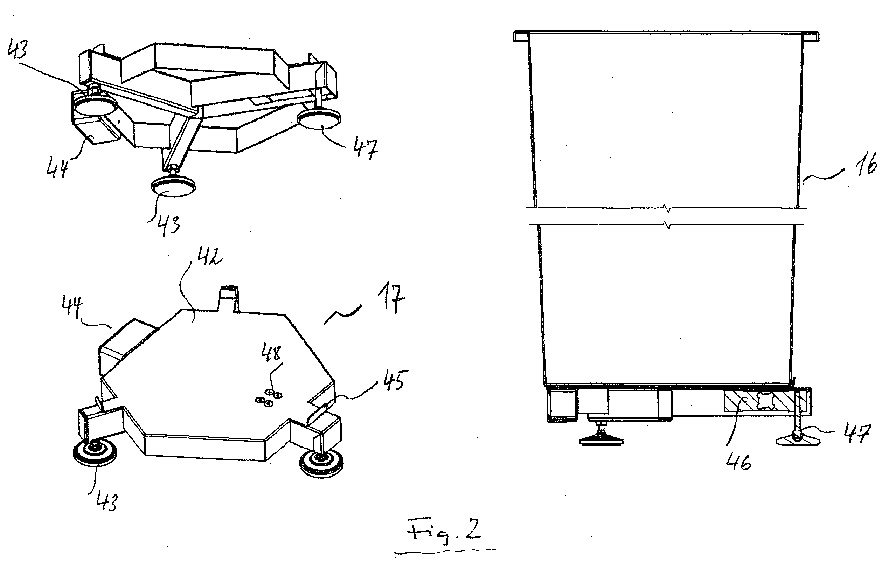

Gemäß Figur 2 besteht die Wäageeinrichtung (17) aus einer Wäagezelle (46) deren Signal von Elektronik (44) an der Wäageplattform (42) verstärkt, elektronisch aufbereitet, oder auch von Elektronik (2) als auch von einer evtl. nachfolgenden Elektronik (5) verarbeitet werden kann. Dabei können voreingestellte Gewichtsgrenzwerte des Solebehälters überwacht u. optisch bzw. akustisch zur Anzeige bzw. bei EDV techn. Verarbeitung ferndiagnostiziert werden.

Die Wäagezelle (46) ist an der Wäageplattform (42) mittels Schrauben (48) so befestigt, dass ein Drittel des Sole- bzw. Salzgewichtes auf dem Messfuß (47) lastet. Zur Seitenführung des Solebehälters sind die Seitenbegrenzungen (45) angebracht.

Mittels Elektrolyseeinrichtung (18) kann während des Regenerationsvorgangs des Enthärters (15) chlorhaltige Lösung aus der zur Elektrolysezelle (18) fließenden Salzsole gebildet werden. Dabei versteht es sich, dass die Chlorkonzentration von der Solekonzentration, aber im Wesentlichen von der Höhe der elektrisch zugeführten Leistung zur Elektrolysezelle abhängt. Der mikrobielle Aufwuchs im Enthärterharz wird dadurch stark reduziert.

(19) zeigt einen doppelten Kohlefilter/Dechlorierungseinrichtung, der zur Filtration des Chlors eingesetzt wird.

Filterstufe (20) kann als Feinfilterstufe kleinste Partikel aus dem Filterwasser (7) entfernen, bevor es beispielweise einer Umkehrosmoseanlage oder einer Trinkwasseranlage zugeführt wird.

Die Aktor-Sensor-Einheit (3) kann mit einem elektronischen Wasserzähler (21) zur Registrierung und Meldung der Wasserverbräuche bestückt werden.

Zur Überwachung des Chlorgehalts der zugeführten Flüssigkeit befindet sich in einer Chlorsensorkammer (29) vorzugsweise ein Chlorsensor (30), entweder zur Messung des gesamten Chlors oder des freien Chlors.

Die Chlorsensorkammer (29) hat einen Zufluss und einen freien Abfluss. Direkt vor der Sensorkammer befindet sich das Freigabeventil (28).
Üblicherweise kann die zugeführte Flüssigkeit vom Wasserversorger mit Chlor unterschiedlicher Konzentrationen gechlort werden, wobei je nach Hygienezustand unter Umständen zeitweise kein Chloreintrag vorhanden ist.

Insofern ist in diesem Fall keine Aussage über die ordnungsgemäße Funktion des Sensors (30) möglich.

Zur regelmäßigen Überprüfung des Chlorsensors wird das Testventil (27), das Soleansaugventil (24), wie auch das Freigabeventil (28) geöffnet und die Elektrolysezelle (18) eingeschaltet. Dabei wird Sole beziehungsweise Chlorhaltige Lösung in einem ausgewählten Konzentrationsverhältnis aus dem Behälter (16) über das einstellbare Soleansaugventil 24 und die Pumpe (23) angesaugt, mit Flüssigkeit über Flussdrossel (25) vermischt, zur Messkammer (29) weitergeleitet, über Chlorsensor (30) registriert und mit der Elektronik (2) beziehungsweise (5) ausgewertet.
Durch diesen regelmäßigen Test kann die ordnungsgemäße Funktion der Messzelle (30) sichergestellt werden.
Es liegt im Sinne der Erfindung eine Bereitstellung und Überwachung der Natriumchloridsolelösung auch ausschließlich zum Zwecke eines Chlorsensormonitorings, unabhängig von einem Enthärter oder weiteren Filterstufen einzusetzen. Dabei sind die Ansaugleitung der Solelösung und die Elektrolysezelle für die elektrolytische Chlorerzeugung unabhängig von der Soleansaugleitung und der Elektrolysezelle des Enthärters geführt.

Pumpe (23) ist beispielhaft als Venturipumpe dargestellt, andere Pumpentypen sind zur Erreichung der Funktion möglich, wobei in diesem Falle eine Zudosierung der chlorhaltigen Lösung mittels einer nicht dargestellten Pumpe aus Leitung 24a in Leitung 25a erfolgt.

Zur Überwachung der korrekten Kohlefilterfunktion/Dechloriereinrichtung (19) kann zunächst ein Ventil, beispielsweise (40) oder (27) geöffnet werden. Ebenso wird Freigabeventil (28) geöffnet. Falls sich Chlor in der zugeführten Flüssigkeit befindet, wird dies über den vorher verifizierten Chlorsensor (30) registriert.

Danach werden nacheinander die Ventile (33), (31) oder auch (32) geöffnet, ebenso wird das Chlorfreigabeventils (28) geöffnet. So können die Filterstufen des Kohlefilters getestet werden. Registriert der Chlorsensor das Nichtvorhandensein von Chlor ist die Überprüfung des Filters erfolgreich abgeschlossen. Es liegt im Sinne der Erfindung, dass auch diese Messung eigenständig ausgeführt und EDV technisch registriert werden kann.

Zur Überwachung der Filterstufen (9), (14), (20) wird der Druckaufnehmer (41) wahlweise und nacheinander mit den an den Filterstufen herrschenden Drücken über die in Fig. 1 angeordneten Ventile vor oder nach den Filterstufen beaufschlagt.

So findet beispielweise die Überwachung des Druckabfalles der Filterstufe (9) mittels Messung des Eingangsdruckes über Ventil (37) und die Überwachung des Ausgangdruckes durch das Ventil (38) statt.

Äquivalent zu der vorgenannten Messung sind in Figur 1 die Messung der Druckabfälle durch Schaltung der Ventile(39 / 40) für die Filterstufen (14) und der Ventile (31 / 32) für Filterstufe (20) nachzuvollziehen.

Die Ermittlung der Druckabfälle an Enthärtung (15) und Dechlorierung (19) ist durch ein aufeinander folgendes Schalten der Ventile (40, 27, 33, 31) ebenfalls möglich.

Eine atmosphärische Entlastung des Drucksensors (41) generell oder zwischen 2 Messungen kann über Ventil (34) als auch (28) erfolgen.

Durch Messung des Flusses durch Leitung 6 mit Wasseruhr/ Flussmesser (21) oder auch einer entsprechenden Flussmessung in einer nachfolgenden Aufbereitung, können die an den Filtern gemessenen Druckwerte mittels Elektronik (2, 5) auf Standard- bzw. Mittelwerte errechnet und ein Warn-, Austausch-, Spül-, oder Wartungszeitpunkt für voreingestellte Druckdifferenzen prognostiziert werden.

Da es sich bei der Ermittlung der Filter - Druckdifferenzen in der Regel um relative Messungen handelt ist die Verwendung eines einzigen Drucksensors (41), sowohl kostenmäßig, als auch hinsichtlich des Kalibrieraufwandes vorteilhaft.

Normalerweise sind die Wassereingangsdrücke an Leitung (6) z.B. an Filter (9) bekannt, sodass der Drucksensor (41) vor Beginn eines Messzyklus mit einem bekannten Druck beaufschlagt im Rahmen einer Wartung oder Techniker Inspektion zu verifizieren ist.

Eine vorteilhafte Ausgestaltung der Druckmessung ist die Ermittlung von Druckmittelwerten mittels Elektronik (2, 5) an den jeweiligen Filtern (9, 14, 15, 19, 20) indem beispielsweise 50 Messungen zu einem Mittelwert zusammengefasst und über einen beispielhaften Zeitraum von 1000 Betriebsstunden dargestellt werden.
Änderungen die auf ein Lebensdauerende des Sensors (41) oder des Verblockens der o.a. Filter zurückzuführen sind, lassen sich damit EDV - technisch erkennen bzw. prognostizieren und fernabfragen.

Zur Überwachung der korrekten Funktion des Enthärters (15) wird zunächst Ventil, (40) geöffnet und dem Calciumsensor (36) durch das geöffnete Ventil (34) Hartwasser über Messkammer (35) zugeführt.
Im Anschluss wird enthärtete Flüssigkeit über Flussdrossel (25), Ventile (27, 34) in die Messkammer (35) zum Ionensensitiven Calciumsensor (36) geleitet.

**Legende**

| | |
|---|---|
| 1. | Vorfiltration mit Sensorpaket |
| 2. | Elektronik Sensorpaket |
| 3. | Aktor- und Sensoreinheit |
| 4. | Vorfiltrationskomponenten |
| 5. | Elektronik Nachfiltration |
| 6. | Wassereingang |
| 7. | Filterwasser |
| 8. | Absperrventil |
| 9. | Rückspülbarer Vorfilter mit Reinigungsventil |
| 10. | Sicherheitsabsperrventil |
| 11. | Rohrtrenner |
| 12. | Rückflussverhinderer |
| 13. | Druckerhöhungseinheit |
| 14. | Feinfilterstufe 2 |
| 15. | Enthärtungsstufe |
| 16. | Salzsoleaufbereitung/ Soletank |
| 17. | Wäageeinheit |
| 18. | Elektrolysezelle |
| 19. | Dechlorierungsstufe/ Kohlefilter |
| 20. | Feinfilterstufe 3 |
| 21. | Wasseruhrt Flussmesser |
| 22. | Leckagemeldung mit Sensor |
| 23. | Solepumpe |
| 24. | Soleansaugventil |
| 25. | Flussdrossel |
| 26. | Rückflussverhinderung |
| 27. | Chlorsensortestventil / Calciumprüfventil I |
| 28. | Chlorsensorfreigabeventil |
| 29. | Chlorsensorkammer |
| 30. | Chlorsensor |
| 31. | Chlorprüfventil II / Feinfilterstufe 3 Eingangsdruck |
| 32. | Chlorprüfventil III / Feinfilterstufe 3 Ausgangsdruck |
| 33. | Chlorprüfventil I |
| 34. | Calciumsensorfreigabeventil |
| 35. | Calciumsensorkammer |
| 36. | Calciumsensor |
| 37. | Feinfilterstufe 1 Eingangsdruck |
| 38. | Feinfilterstufe 1 Ausgangsdruck |
| 39. | Feinfilterstufe 2 Eingangsdruck |
| 40. | Feinfilterstufe 2 Ausgangsdruck/ Calciumtestventil |
| 41. | Drucksensor |
| 6a | Leitungen |
| 6b | |
| 16a | |
| 19a | |
| 24a | |
| 25a | |
| 42. | Plattform |
| 43. | Einstellbare Füße |
| 44. | Elektronik |
| 45. | Seitenbegrenzung |
| 46. | Wäagezelle |
| 47. | Messfuss |
| 48. | Befestigung Wäagezelle |

## Patentansprüche

1. Wasseraufbereitungsanlage, insbesondere Umkehrosmoseanlage, mit einem Salzsolebehälter (16), der auf einer Wägeplattform (42) einer Wägeeinrichtung (17) angeordnet ist, die das Gewicht des Salzsolebehälters (16) misst, **dadurch gekennzeichnet,**
**dass** die Wägeplattform (42) auf drei Trägern aufliegt, die sternförmig in demselben Winkel zueinander verlaufen und mit drei Füßen versehen sind, die denselben Abstand zueinander und von dem Zentrum der Sternform haben,
**dass** ein Fuß (47) einen Messfuß bildet, indem eine Wägezelle (46) zwischen den Messfuß (47) und die Wägeplattform (42) eingeschaltet ist,
**dass** die beiden anderen Füße (43) einstellbar sind und
**dass** die Wägeplattform (42) aufrechte Wandabschnitte zur Zentrierung des Salzsolebehälters (16) auf der Wägeplattform (42) aufweist.

2. Wasseraufbereitungsanlage nach Anspruch 1,
**dadurch gekennzeichnet,**
**dass** die Wägeeinrichtung (17) als eigenständiges konstruktives Untergestell ausgebildet ist.

3. Wasseraufbereitungsanlage nach den Ansprüchen 1 oder 2,
**dadurch gekennzeichnet,**
**dass** die Wägezelle mit einer Elektronik (2,5) verbunden ist, die deren Signale verarbeitet.

4. Wasseraufbereitungsanlage nach den Ansprüchen 1 bis 3,
**dadurch gekennzeichnet,**
**dass** eine optische und/oder akustische Warnanzeige mit der Elektronik (2,5) verbunden ist, die bei Erreichen eines vorbestimmten Grenzwertes ein Warnsignal abgibt.

## Claims

1. A water treatment installation, particularly a reverse osmosis installation, with a brine container (16), which is arranged on a weighing platform (42) of a weighing device (17), which measures the weight of the brine container (16), **characterised in that** the weighing platform (42) rests on three supports, which extend in the shape of a star at the same angle to one another and are provided with three feet, which have the same distance from one another and from the centre of the star shape, that one foot (47) constitutes a measuring foot **in that** a weighing cell (46) is interposed between the measuring foot (47) and the weighing platform (42), that the two other feet (43) are adjustable and that the weighing platform (42) has upright wall sections for centring the brine container (16) on the weighing platform (42).

2. A water treatment installation as claimed in Claim 1, **characterised in that** the weighing device (17) is constructed in the form of an independent, structural base.

3. A water treatment installation as claimed in Claims 1 or 2, **characterised in that** the weighing cell is connected to an electronic system (2, 5) which processes its signals.

4. A water treatment installation as claimed in Claims 1 to 3, **characterised in that** an optical and/or acoustic warning indicator is connected to the electronic system (2, 5), which emits a warning signal when a predetermined threshold value is reached.

## Revendications

1. Installation de production d'eau, en particulier installation à osmose inverse, comprenant un réservoir de saumure (16), qui est disposé sur une plate-forme de pesée (42) d'un système de pesée (17), qui mesure le poids du réservoir de saumure (16),
**caractérisée en ce**
**que** la plate-forme de pesée (42) repose sur trois supports, qui s'étendent les uns par rapport aux autres en forme d'étoile selon le même angle et qui sont pourvus de trois pieds, qui ont la même distance les uns par rapport aux autres et par rapport au centre de la forme d'étoile,
**qu'**un pied (47) forme un pied de mesure, en ce qu'une cellule de pesée (46) est montée entre le pied de mesure (47) et la plate-forme de pesée (42),
**que** les deux autres pieds (43) peuvent être réglés,
et
**que** la plate-forme de pesée (42) présente des sections de paroi verticales pour le centrage du réservoir de saumure (16) sur la plate-forme de pesée (42).

2. Installation de production d'eau selon la revendication 1,
**caractérisée en ce**
**que** le système de pesée (17) est réalisé sous la forme d'un châssis à structure autonome.

3. Installation de production d'eau selon les revendications 1 ou 2,
**caractérisée en ce**
**que** la cellule de pesée est reliée à un composant électronique (2, 5), qui traite les signaux de cette dernière.

4. Installation de production d'eau selon les revendications 1 à 3,
**caractérisée en ce**
**qu'**un affichage d'avertissement optique et/ou acoustique est relié au composant électronique (2, 5), qui émet un signal d'avertissement lorsqu'une valeur limite prédéterminée est atteinte.
